# EUROPEAN PATENT APPLICATION

(11) **EP 4 248 732 A1**
(43) Date of publication of application: **27.09.2023**
(21) Application number: 23163951.9
(22) Date of filing: 24.03.2023
(51) Int. Cl.: A01G 9/04, A01G 27/02

(54) **PLANT POT WITH CLOSE-FITTING WATER COLLECTION POT**

(30) Priority: 24.03.2022 BE 202205209
(71) Applicant: The Pots Company NV, 8500 Kortrijk (BE)
(72) Inventor: DEVRIENDT, Nicolaes, 8500 Kortrijk (BE); BOSSUWE, Delphine, 8500 Kortrijk (BE); DEVRIENDT, Emmanuel, 8500 Kortrijk (BE)
(74) Representative: Brantsandpatents bv

(57) **Abstract**

The present invention relates to a device for a two-pot system consisting of a plant pot (14, 16, 18, 1, 55) and a water collection pot (15, 17, 2), the water collection pot (15, 17, 2) comprising a ground surface (44) and a raised edge (43) suitable for collecting excess water from the plant pot (14, 16, 18, 1, 55) and wherein the raised edge (43) has a thickness suitable to support the plant pot (14, 16, 18, 1, 55); wherein the plant pot (14, 16, 18, 1, 55) comprises a bottom (21, 41, 45, 53) with openings (26, 35, 46, 52), a wall (49) that rises from the bottom (21, 41, 45, 53), and 3-8 legs (23, 33, 50), wherein the legs (23, 33, 50) are located on the bottom (21, 41, 45, 53), along the other side of the bottom (21, 41, 45, 53) than the upright wall (20, 21, 28, 32, 40, 48, 51), wherein the length of at least 50% of the centerlines of the raised edge (43) of the water collection pot (15, 17, 2) differs at most by the thickness of the raised edge (43) from the length of the parallel lines through the bottom (21, 41, 45, 53) of the plant pot (14, 16, 18, 1, 55); and that 2-30% of the centerlines of the raised edge (43) of the water collection pot (15, 17, 2) are 1.05-4 times the thickness of the raised edge (43) longer than the length of the parallel lines through the bottom (21, 41, 45, 53) of the plant pot (14, 16, 18, 1, 55).

The invention also relates to the use of a close-fitting two-pot system for growing or treating plants.

## Description

### TECHNICAL FIELD

The present invention relates to a two-pot system, consisting of a plant pot and a water collection pot. The plant pot comprises a bottom and a wall extending from the bottom. The plant pot has holes in the bottom, allowing excess water to percolate into the water collection pot. This system can be used in horticulture for keeping, treating and/or growing a plant.

### PRIOR ART

Life is busy these days and people living in cities dedicate themselves to work every day. Life becomes relatively boring as a result. As an alternative, more and more people are tending to buy potted plants to make their environment green, so that potted plants not only have a beautification function, but also bring fresh air and relieve the nervous mind of modern people.

A conventional plant pot can contain soil and 1 or more plants. At the bottom, the pot has 1 or more holes, so that when the soil in the pot contains too much water, the water can be drained through the corresponding holes.

The system with holes in the bottom of the plant pot, however, is not able to maintain the moisture in the soil in the plant pot. The system cannot supply or drain sufficient water in time. Therefore, the plant pot should be watered in time to prevent the plant from drying out and discoloring.

Often a plant pot is placed on a saucer to collect water and to avoid water spillage. When a plant pot is placed on a surface, a saucer attached to the pot also offers advantages, in particular easier movability and manageability.

CN201282669 describes a plant pot in which a horizontal perforated dividing surface was applied at 10-50% of the height of the pot. There is an opening along the side for air to enter. Water can be returned to the soil via a sponge system.

JP2019062877 describes a two-pot system where one pot serves to hold the soil and the plant. The other pot has the function of storing the water that percolates from the holes of the first pot.

CN206776180 describes a similar two-pot system. The plant pot known from this is positioned completely or almost completely in a water collection pot so that the plant pot is protected by the water collection pot during transport.

US20060207175 describes a similar two-pot system. The water collection pot has an opening along the side through which the water that has percolated through the soil can be drained.

These known devices are not suitable for simple transport. Due to the difficult stackability, different shapes or sizes, the amount of pots that can be stacked within volume is limited, regardless of the amount of soil that fits in the pot.

These devices have the problem that the excess water is difficult to remove. Furthermore, these water-filled open systems, admit mosquitoes and other insects via the air. These animals then live and reproduce in the stagnant water. Certain inventions sealed the flat collecting disc airtight. However, if the bottom of the flower pot is placed directly on a flat-bottomed collection disc and submerged in water, the roots of the plant may be standing in the water. This can affect the roots and is undesirable. A wick or sponge system, to return water to the plant pot, breaks quickly and is limited in the amount of water it can transport.

The present invention aims to solve at least some of the above problems or drawbacks. The aim of the invention is to provide a method which eliminates those disadvantages.

### SUMMARY OF THE INVENTION

To this end, the invention provides a device according to claim 1. The device concerns a two-pot system consisting of a plant pot and a water collection pot that guarantees an improved maintenance of an optimum moisture in the soil for plant growth. It is an object of the invention to provide a system which offers advantages to both a novice plant owner and the professional grower, for instance reducing the required watering frequency and in particular the device simplifies the administration of water via the water collection pot.

Preferred forms of this two-pot system are described in the dependent claims 2 to 14. These preferred forms describe shapes and dimensions of the product, as well as characteristics of the openings in the bottom surface. According to claim 7, the water collection pot may be provided with wheels. This addition has the advantage, among other things, that the plant pot and the water collection pot can be easily moved.

In a second aspect, the present invention relates to a use according to claim 15. Use of the device has the advantage, inter alia, that the watering frequency can be reduced and that the delivery of water into the water collection pot is simple.

### DESCRIPTION OF THE FIGURES

**Figure 1** shows a schematic representation in front view of a two-pot system according to the known prior art.
**Figure 2A** shows a schematic representation of a possible embodiment according to the present invention.
**Figure 2B** shows a schematic representation of a possible embodiment according to the present invention from a different perspective than Figure 2A.
**Figure 3** shows a cross-section of a possible embodiment according to the present invention.
**Figure 4** shows a schematic representation in front view of a stacked embodiment of the present invention.
**Figure 5** shows a schematic representation of an embodiment in which wheels are mounted on the water collection pot according to the present invention.
**Figure 6** shows a schematic representation of the underside of a plant pot from an oblique view according to an embodiment of the present invention.
**Figure 7** shows a schematic representation of the underside of a plant pot from a perpendicular view according to an embodiment of the present invention.
**Figure 8** shows another cross-section of a possible embodiment according to the present invention.
**Figure 9** shows a top view of a possible embodiment of a plant pot according to the present invention.

### DETAILED DESCRIPTION

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

When the term "around" or "about" is used in this document with a measurable quantity, a parameter, a duration or moment, and the like, then variations are meant of approx. 20% or less, preferably approx. 10% or less, more preferably approx. 5% or less, even more preferably approx. 1% or less, and even more preferably approx. 0.1% or less than and of the quoted value, insofar as such variations are applicable in the described invention. However, it must be understood that the value of a quantity used where the term "about" or "around" is used, is itself specifically disclosed.

The terms "comprise", "comprising", "consist of", "consisting of", "provided with", "include", "including", "contain", "containing", are synonyms and are inclusive or open terms that indicate the presence of what follows, and which do not exclude or prevent the presence of other components, characteristics, elements, members, steps, as known from or disclosed in the prior art.

Quoting numerical intervals by endpoints comprises all integers, fractions and/or real numbers between the endpoints, these endpoints included.

The term "soil" within the context of this document should be understood as a substrate on which/in which the plants can grow. This substrate can consist of sand, loam, clay, organic or inorganic materials or a combination of these.

The term "two-pot system" should be understood in the context of this document as a water collection pot in combination with a plant pot containing soil and possibly a plant.

The "close fit" of the plant pot and the water collection pot should be understood in the context of this document as a difference in surface area between the bottom of the plant pot and the top of the water collection pot of less than 20%. The upright wall of the plant pot and the raised edge of the water-collecting pot run approximately parallel.

A "centerline" is a line segment that connects two points on the outer edge of an object and passes through the center of the object. Two lines are "parallel" if they lie in the same plane and have the same direction. Crossing lines do not intersect but are not in the same plane.

In a first aspect, the invention relates to a two-pot system consisting of a plant pot and a water collection pot, the water collection pot comprising a ground surface and a raised edge suitable for collecting excess water from the plant pot and wherein the raised edge has a thickness suitable to support the plant pot; wherein the plant pot comprises a bottom with openings, a wall that rises from the bottom, and 3-8 legs , wherein the legs are located on the bottom, along the other side of the bottom than the upright wall, wherein the length of at least 50% of the centerlines of the raised edge of the water collection pot differs at most by the thickness of the raised edge from the length of the parallel lines through the bottom of the plant pot; and that 2-30% of the centerlines of the raised edge of the water collection pot are 1.05-4 times the thickness of the raised edge longer than the length of the parallel lines through the bottom of the plant pot. The plant pot preferably comprises 3-5 legs, more preferably 3 legs. Preferably, the centerlines of the raised edge of the water collection pot are defined in a first plane by the end of the raised edge that is not attached to the ground surface. Preferably, the plane through the bottom of the plant pot and the first plane are kept parallel for determining the length. According to an embodiment, the first plane coincides with the plane through the bottom when the plant pot is placed in the water collection pot. The parallel lines can therefore partly or completely coincide.

According to an embodiment, the water collection pot is beam-shaped, star-shaped, cubical, cylindrical in shape or has the shape of a truncated cone. According to an embodiment, the length of at least 50% of these parallel lines from the bottom of the plant pot differs from the outside diameter of the water collection pot by a maximum of 3 mm and 2-30% of these lines are at least 5 mm smaller than the outside diameter of the water collection pot. Because these lengths differ for a part of the centerlines by a maximum of the thickness of the raised edge, the plant pot fits on the water collection pot. Because for some centerlines, the length is 1.05-4 times the thickness of the raised edge of the parallel line through the bottom of the plant pot, there is an opening between the water collection pot and the plant pot, suitable for pouring water into the water collection pot. According to an embodiment, the height of the legs is at least 3 mm, 5 mm, 20 mm or 30 mm.

The centerlines of the raised edge of the water collection pot are measured at the first end of the raised edge, which is the plane opposite the ground surface. The parallel lines from the bottom of the plant pot are measured in the plane at the bottom of the bottom of the plant pot, this is the plane on the side where the legs are located. The plane through the bottom of the plant pot and the first end of the raised edge are kept parallel during the measurement.

Small trees, precious flowers or other plants are usually grown by potting them. Flowers such as orchids or small trees for admiration are often placed indoors or outdoors in pots. In particular, placing pots indoors can serve the functions of indoor beautification and indoor air quality conditioning. The primary elements for potting include soil, water and air. It is customary in such pots to prepare mainly a pot, in which soil is placed, after which the flowers or small trees are planted in the soil. Known pots are usually made of ceramic material, or formed directly by injection molding from plastic material. In any case, the soil in pots needs irrigation of water in it.

It was noticed by the inventors of the present invention that people who water plants have no idea about the field capacity of the soil. The field capacity is a measure of the amount of water that a saturated soil can hold after 2 to 3 days of leaching. The field capacity differs for different types of soil and is lower for sand or large rocks. Since plant pots are often filled with sand or other substrates with large pores, the field capacity will be rather low. The amount of water that may be added can be calculated based on the field capacity and the current humidity. Often both values are not known when plants are watered. The plants are thus overwatered, and the excess will quickly seep through the soil. Once the water flows through the bottom of the pot, it sometimes ends up on the floor or carpet. This can cause stains.

Because the raised edge has a thickness, preferably of 1-40 mm, more preferably 3-20 mm, the raised edge is suitable for supporting the plant pot. If this plant pot is filled with soil and houses a plant, the weight can quickly exceed 30 kg.

According to an embodiment, 50-90% of the cross-sections through a plane through the upright wall of the plant pot parallel to the plane through the bottom of the plant pot have a kidney shape and the remaining 50-10% have a circular shape. Preferably 70-85% has a kidney shape and the remaining 30-15% has a circular shape. This kidney shape is obtained by making a cut-out from a first circle on the edge of a second circle with a radius of 0.5-2 times the radius of the first circle, with the second circle overlapping the first circle. This overlap comes to 0.55-0.8 times the radius at the bottom surface and decreases as the diameter of the plant pot increases. At a certain height, the second circle no longer overlaps the first circle and the cross-section has a circular shape. Preferably, the radius of the first circle is equal to the radius of the second circle. Preferably, the overlap decreases linearly, logarithmically or exponentially as a function of the distance from the plane to the bottom of the plant pot. Preferably, the overlap at the bottom surface is up to 0.60-0.70 times the radius. Preferably, the corners of the cut-out are flattened.

According to the present invention it is possible to fill the plant pot with much more water. In this way a user-friendly system is provided because the filling with liquid is always limited to a larger maximum volume, so that users or possibly a machine can fill the system with liquid relatively quickly and less accurately. Since excess water flows into the water collection pot and can eventually re-enter the plant pot by capillary action, water remains available to the plant for longer periods. As a result, the user or machine has to refill water less often.

Because the plant pot has 3-8 legs, a volume is created between the plant pot and the water collection pot, suitable for collecting the excess water from the plant pot. This volume is much larger than if there were no legs. The plant pot preferably comprises 3-5 legs, more preferably 3.

Because the length of at least 50% of these parallel lines from the bottom of the plant pot differ by a maximum of 3 mm from the outside diameter of the water collection pot, the plant pot fits closely to the water collection pot at these places. Because the water collection pot fits closely to the plant pot, no water or soil can spill next to the pot and end up on the ground. Furthermore, the pressure of the plant pot on the water collection pot prevents air displacement and the evaporation of water, so that watering has to be done less often. An advantage of this is that costs can be saved by reducing the number of watering operations. The watering frequency for the plant growing in the pot during the cultivation phase can also be further reduced by means of the reservoir filled with, for example, water. In addition, the watering frequency is further reduced because the water from the water collection pot can go back up by capillary forces through the small holes at the bottom of the plant pot. In addition to lowering costs, this also offers environmental benefits, both through reduced water consumption and through less purification of contaminated water with nutrients. Moreover, the cultivation process in the greenhouses in which the plants are grown will then consume less energy due to the reduction in the number of watering operations.

Because 2-30% of these lines are at least 5 mm smaller than the outside diameter of the water collection pot, a small opening is created, suitable for administering water. This opening is preferably elliptical with a length of 2-8 cm and a maximum width of 0.2-6 cm.

The plant pot has a simple structure and is convenient to use. It can be applied for keeping, treating or growing various plants, flowers, etc. The plant pot and the water collection pot fit closely, both horizontally and vertically. Thus, by stacking successive flower pots with saucers, it is possible to obtain a very compact stacking in order to also enable storage, packaging and transport at optimally low costs. On the other hand, to make the capacity of the saucer sufficiently large, it is recommended that the half height of the plant pot should not exceed the sum of the width and the length.

A two-pot system has the advantage compared to a system consisting of one pot with a built-in water reservoir that excess water can be easily removed. It is therefore also easy to check whether the field capacity has already been reached by looking into the water collection pot. This is not possible in a one-pot system. Furthermore, no insects can enter into this reservoir. It is possible for insects to penetrate systems that do not connect closely or systems that have an opening for draining water. The water collection pot covers a maximum of 10% of the upward side wall of the plant pot. As a result, the water collection pot will have no or negligible influence on, for example, the amount of light falling on the plant growing in the pot. According to an embodiment, the diameter of an opening in the bottom of the plant pot is 0.1 to 0.5 cm, more preferably 0.2 to 0.3 cm. This is ideal to allow enough water to pass through but to prevent root growth.

According to an embodiment, the upright wall of the plant pot continues under the bottom in the direction of the legs, at places where these parallel lines from the bottom of the plant pot differ from the outside diameter of the water collection pot by at least 5 mm, preferably at places where the lines from the bottom of the plant pot differ at least 2 mm from the outside diameter of the water collection pot.

Because the upright wall of the plant pot continues under the bottom in the direction of the legs, in places where these lines from the bottom of the plant pot differ by at least 5 mm from the outside diameter of the water collection pot, it is more difficult for insects to end up in the collected water in the water collection pot. The opening through which water can be added to the water collection pot is thus sealed airtight from the rest of the water in the water collection pot.

According to an embodiment, the continuing upright wall under the bottom has a height of 50-100% of the height of the legs, measured perpendicular to the bottom. According to an embodiment, the continuing upright wall under the bottom has a height of 70-95% of the height of the legs, measured perpendicular to the bottom. Because the continuing upright wall under the bottom has a height of 70-95% of the height of the legs, measured perpendicular to the bottom, it is more difficult for insects to end up in the collected water in the water collection pot. The opening through which water can be added to the water collection pot is thus sealed airtight from the rest of the water in the water collection pot. Preferably, the height of the legs differs by 5-20 mm from the height of the continuing upright wall under the bottom. According to an embodiment, the continuing upright wall under the bottom of the plant pot closely adjoins the water collection pot.

According to an embodiment, the openings in the bottom of the plant pot have a diameter of less than 5 mm. The holes at the bottom of the plant pot are small so that the roots cannot grow out of the plant pot and into the water collection pot. There they could end up in the water, have no oxygen and die. However, the water can go up into the plant pot through the holes. The water reaches where the plant needs it via capillary forces. Most plants grow best at a field capacity of about 70%. After watering, the soil dries out, but when humidity drops to <50% of the field capacity, water from the water collection pot can make up for this deficiency through the holes at the bottom of the plant pot. Therefore, it is essential to keep the size of these holes small enough. This system ensures that the humidity in the pot is automatically maintained, resulting in better plant growth. So, overwatering the plant is impossible with this system. The roots can never be soaked in water. On the other hand, when the plant needs water, the soil can suck its water from the reservoir of the water collection pot.

So, if water is added to the pot, water will be absorbed by the soil. Excess water can then flow into the water collection pot, which acts as a storage area. In this way the soil can contain a suitable amount of water. The water flowing into the storage area not only prevents water wastage, but also provides extra water to keep the soil moist for a long time.

According to an embodiment, the openings of the plant pot are located on a protrusion in the middle of the bottom, preferably differing at most 20° from the direction of the legs.

Because the openings of the plant pot are located on a protrusion in the middle of the bottom, contact is created between the soil in the plant pot and the water in the water collection pot. Thanks to this contact, water from the water collection pot can flow back to the plant pot through the openings. The legs provide a volume in the device where water percolating through the plant pot can be collected. The protrusion in the middle of the bottom allows the water to be drawn back into the soil when the humidity drops. According to an embodiment, the protrusion is 2-7 cm wide. According to an embodiment, the height of the protrusion differs by a maximum of 20% from the height of the legs, preferably the height of the protrusion differs by a maximum of 2 mm from the height of the legs. According to an embodiment, the protrusion is cylindrical, rectangular or prism-shaped. Preferably, the legs and/or the protrusion in the middle of the bottom are perpendicular to the bottom. Preferably the legs and/or the protrusion are thicker closer to the bottom, more preferably they thicken at an angle of 5-30°, more preferably 10-20°. Preferably the legs are 2-5 times thicker at the bottom than at the end, more preferably 2 to 3 times. Preferably, the protrusion is 20-90% thicker at the bottom than at the end, more preferably 30-60%.

According to an embodiment, the legs are at least 1 mm from the edge of the bottom of the plant pot, preferably between 1 and 100 mm, more preferably between 1.5 and 20 mm, more preferably between 1.5 and 5 mm and most preferably 1.5-2.5 mm.

Because the legs are at least 1 mm from the edge of the bottom of the plant pot, the water collection pot is more stable than if the legs were on the edge. The distance from the legs to the edge is measured from the point on the surface of the legs closest to the edge of the bottom of the plant pot. The distance of 1.5-2.5 mm is similar to the thickness of the raised edge of the water collection pot and is therefore suitable for obtaining a two-pot system wherein the raised edge of the water collection pot fits closely to the plant pot along the inner and outside diameter. Because the plant pot fits closely to the water collection pot along the outside, there is less chance of knocking over the water collection pot or hitting the raised edge of the water collection pot.

According to an embodiment, the bottom of the water collection pot is provided with wheels, preferably 3-10 wheels, more preferably 3-6 wheels.

Because the bottom of the water collection pot is equipped with wheels suitable for rolling the water collection pot, plant pots can be easily moved. The amount of wheels may depend on the size of the pots. Lifting a plant pot or placing a plant roller under a plant pot can be unsafe due to slipping and breaking of the plant pot during moving. It has been found that connecting the water collection pot closely to the plant pots can increase the frictional resistance and the legs can act as an anti-slip element. This ensures that the pots remain upright and that no pots "slip away" when being moved. Because the wheels are attached to the water collection pot, it is not necessary to combine a plant pot with a base disc and a plant roller. This would create an unstable system. It has been found that the dimensions and design of the multi-pot system and the wheels are so optimally designed that this avoids slipping. In addition, the distance between the bottom of the water collection pot and the ground is kept to a minimum, which greatly reduces the risk of tipping over.

The preferred form with wheels has been developed in such a way that it is easy to seek out improved environmental factors to improve growth. This provides a great head start to the growing season in residential gardens, especially in late spring climates. The preferred form of the present invention can also be used for storing ferns and potted plants during the winter months in a garage or outside building. Plants that are not frost-resistant can freeze to death and must be protected. If it is desired to have the plants outside during the day, it is possible to easily move them using the wheels at the bottom. By mounting wheels at the bottom of the system, the risk of loss of water, soil or the plant when moving is greatly reduced. In addition, the plant pot cannot be dropped, which can damage the pot, the plant and the place where it lands.

According to an embodiment, the wheels are located symmetrically on the water collection pot. Because the wheels are located symmetrically on the water collection pot, they are suitable for evenly distributing the pressure of the plant pots over the ground and the water collection pot is stable. According to an embodiment, the wheels can rotate in all directions, so that the device can be easily moved in all directions.

The plant pot and the water collection pot fit closely. The wheels under the water collection pot are also not visible if the angle with the ground surface is greater than 30° and the device is on the ground. The height of the wheels is a maximum of 20% greater than the height of the legs. The preferred form with wheels has been developed in such a way that it is easy to seek out improved environmental factors to improve growth. This provides a great head start to the growing season in residential gardens, especially in late spring climates. The preferred form of the present invention can also be used for storing ferns and potted plants during the winter months in a garage or outside building. Plants that are not frost-resistant can freeze to death and must be protected. If it is desired to have the plants outside during the day, it is possible to easily move them using the wheels at the bottom. By mounting wheels at the bottom of the system, the risk of loss of water, soil or the plant when moving is greatly reduced. In addition, the plant pot cannot be dropped, which can damage the pots, the plants and the place where they land.

According to an embodiment, the diameter of the smallest circle around the legs is at most 10% smaller than the smallest inner diameter of the water collection pot.

Because the diameter of the smallest circle around the legs is a maximum of 10% smaller than the smallest inner diameter of the water collection pot, the plant pot sits firmly in the water collection pot. The legs fit closely to the water collection pot so that they can hardly move during movements. According to an embodiment, the diameter of the smallest circle around the legs is a maximum of 1 cm smaller than the smallest inner diameter of the water collection pot, preferably a maximum of 3 mm smaller, more preferably a maximum of 1 mm smaller. Because the diameter of the smallest circle around the legs is a maximum of 10% smaller than the smallest inner diameter of the water collection pot, evaporation of the excess water that ends up in the water collection pot is avoided. Because the water collection pot fits closely to the plant pot, no water or soil can spill next to the pot and end up on the ground. Furthermore, the pressure of the plant pot on the water collection pot prevents air displacement and the evaporation of water, so that watering has to be done less often. An advantage of this is that costs can be saved by reducing the number of watering operations. The watering frequency for the plant growing in the pot during the cultivation phase can also be further reduced by means of the reservoir filled with, for example, water. In addition, the watering frequency is further reduced because the water from the water collection pot can go back up by capillary forces through the small openings at the bottom of the plant pot. In addition to lowering costs, this also offers environmental benefits, both through reduced water consumption and through less purification of contaminated water with nutrients.

According to an embodiment, the water collection pot comprises a ground surface and a raised edge, wherein the angle between the ground surface and raised edge differs by a maximum of 5° from the angle between the bottom and the legs, preferably both angles are 70-85°.

Because the water collection pot comprises a ground surface and a raised edge, wherein the angle between the ground surface and the raised edge differs by a maximum of 5° from the angle between the bottom and the legs, the plant pot and the water collection pot fit closely together. As a result, less water can evaporate from the water collection pot. Moreover, the chance of the plant pot falling over when forces are exerted on it is reduced by the extra stability created by connecting the legs to the water collection pot. Because both angles are 70-85°, stability is further increased. The measured angle of 70-85° for the water collection pot is less than 90° because the raised edge of the water collection pot bends away from the center of the water collection pot. The measured angle of 70-85° for the legs is less than 90° because the legs are thinner at the end that is suitable to rest on the bottom of the water collection pot than at the end that is attached to the bottom of the plant pot. Preferably, the ground surface of the water collection pot is circular.

According to an embodiment, the continuing upright wall under the bottom of the plant pot closely adjoins the water collection pot by means of two flaps which connect the continuing upright wall under the bottom of the plant pot to the bottom of the plant pot. According to a further embodiment, these flaps connect the end of the continuing upright wall under the bottom of the plant pot to the edge of the bottom of the plant pot. This gives the flaps a triangular shape, suitable for preventing air, insects and dirt from passing along the continuing upright wall under the bottom of the plant pot, under the plant pot and into the water in the water collection pot. According to an embodiment, the thickness of the upright wall differs from the thickness of the raised edge by a maximum of 10 mm, preferably the thickness of the upright wall differs from the thickness of the raised edge by a maximum of 10 mm, more preferably by a maximum of 2 mm, and even more preferably there is no difference. The thickness of the wall or edge is the shortest distance from the inside to the outside of the plant pot and the water collection pot, respectively, through the wall and the edge, respectively.

According to an embodiment, the height of the legs differs by a maximum of 10% from the height of the raised edge.

Because the height of the legs differs by a maximum of 10% from the height of the raised edge, the plant pot and the water collection pot fit closely together. As a result, less water can evaporate and a stable two-pot system is obtained.

The height of the legs is preferably no more than 1 mm different from the height of the raised edge. As a result, the bottom of the plant pot will at least partly touch the water collection pot when they are put together. Moreover, the legs of the plant pot will also rest on the bottom of the water collection pot.

According to an embodiment, the ratio between the height of the water collection pot and the height of the plant pot is between 1:20 and 1:3, preferably between 1:15 and 1:5.

Because the ratio between the height of the water collection pot and the height of the plant pot is between 1:20 and 1:3, preferably between 1:15 and 1:5, an ideal storage volume for water is obtained. Water that is given too much can run through the bottom to the water collection pot. Water can also be poured directly into the water collection pot. From the water collection pot it can be sucked back into the plant pot if the humidity drops. If the heights are in accordance with the above ratio, not too much material is used for manufacturing the device, but a sufficiently large water collection pot is still obtained.

According to an embodiment, the plant pot and the water collection pot consist of at least 90% by weight of the same material. In a possible embodiment of this invention, the material chosen for the plant pot and the water collection pot is approximately the same. This simplifies the forming process because the polymer does not need to be modified. Furthermore, this embodiment makes it difficult to distinguish visually between the separate water collection pot and the plant pot.

According to an embodiment, the plant pot and the water collection pot comprise a recycled plastic and mineral. In order to reduce the cost of sourcing raw materials, reduce the waste of natural resources for the production of disposable products and minimize possible negative impacts on the environment, continuous efforts were made to develop a product from used thermoplastic materials, which would otherwise end up in an incinerator or landfill. A thermoplastic composite material based on recycled polymers has been developed. A composite is a material that is made up of different components. This often refers to fiber-reinforced plastics. These thermoplastic composite materials have a number of advantages. For example, they can be molded and formed into a number of structural and non-structural usable products, including parking signs, billboards, automotive body panels, and many others. These materials must have the desired properties such as impact resistance, swelling, heat resistance, heat protection, dimensional stability, wear resistance, etc., which are at least comparable to the properties of conventional plastic sheets, mats or boards.

However, the use of recycled materials for the manufacture of non-woven thermoplastic composite materials also has specific disadvantages. For example, the recycling of various lightweight thermoplastic products such as disposable gloves, aprons, air filters, protective covers, plastic lids, polyethylene, etc. is generally not appropriate as they often result in products with physical properties that are generally less acceptable than those of strong thermoplastic materials. Therefore, these types of products remain "waste" and are still sent to landfills and incinerators, with all the harmful consequences this entails for the environment. These deficiencies were remedied by adding minerals. Minerals, such as those from the smectite group, have excellent properties for obtaining a firm but light product.

According to an embodiment, the thickness of the upright wall and/or the raised edge is 1-30 mm, preferably 2-10 mm. Preferably, the protrusion of the bottom is circular with a diameter of 3-10 cm, measured in the bottom surface. Preferably, the protrusion of the bottom is circular with a diameter of 10-30% of the diameter of the raised edge, measured in the bottom surface. According to an embodiment, the raised edge is at an angle of 70-85°, preferably 80-82° with the bottom surface.

According to an embodiment, the shape of the raised edge of the water collection pot is the same as the shape of the end of the upright wall.

Because the shape of the raised edge of the water collection pot is the same as the shape of the end of the upright wall, a two-pot system with a more symmetrical weight distribution is obtained. The bottom of the plant pot has a different shape than the raised edge of the water collection pot

The shape of the raised edge is determined from a viewing direction perpendicular to the ground surface of the water collection pot and the shape is determined by the surface of the end of the edge furthest away from the ground surface of the water collection pot. The shape of the upright wall of the plant pot is determined from a viewing direction perpendicular to the bottom of the plant pot and the shape is determined by the surface of the end of the upright wall furthest away from the bottom of the plant pot.

In a second aspect, the invention relates to a use of the device according to the first aspect for keeping, growing or treating plants in a plant pot in a close-fitting water collection pot.

The device is very suitable for keeping, growing or treating plants. In particular, the device is very suitable for simple watering of the plants. Any advantage and/or feature described in this document, above as well as below, may relate to either of the two aspects of the present invention.

In what follows, the invention is described by way of non-limiting figures illustrating the invention, and which are not intended to and should not be interpreted as limiting the scope of the invention.

### DESCRIPTION OF THE FIGURES

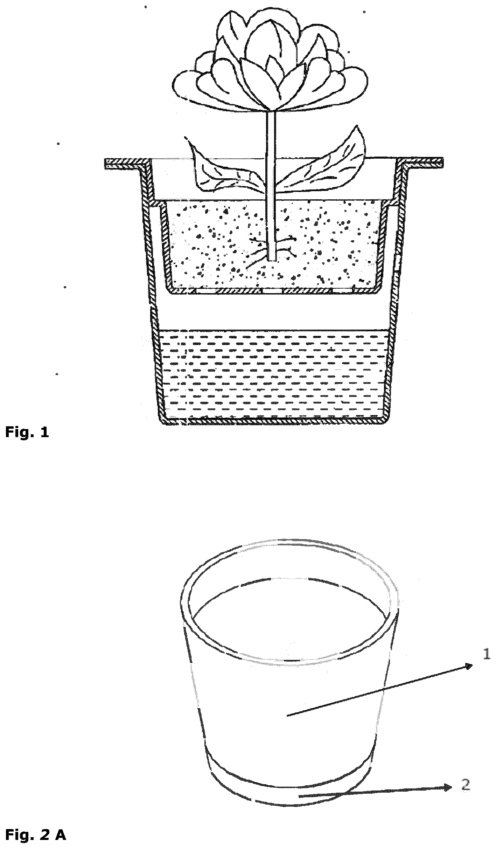

**Figure 1** shows a schematic representation of a two-pot system known in the art. The water collection pot is many times larger than the plant pot. Many more raw materials were used for its production compared to the present invention.

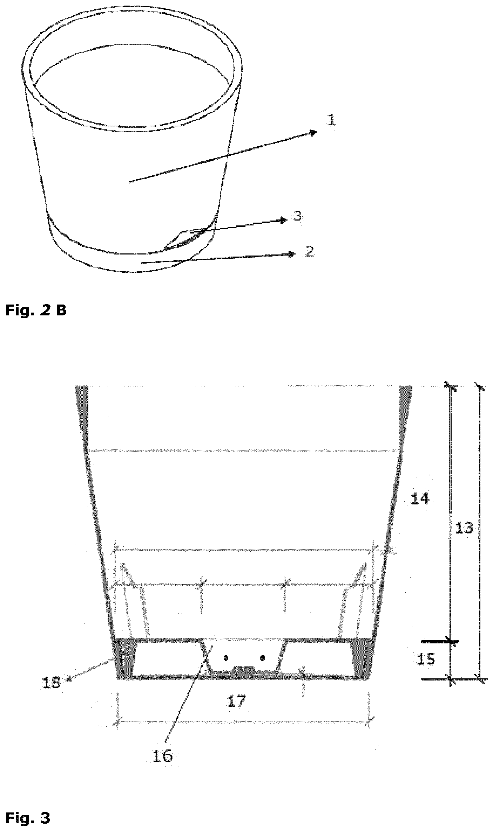

**Figure 2** shows a schematic representation of a possible embodiment according to the present invention, in which a plant pot **1** is located on a water collection pot **2.** As you can see, these pots fit closely together. If wheels were present, they would not be visible from this viewing direction. **Figure 2A** shows a schematic representation of a possible embodiment according to the present invention. This view is from a perspective where the side is visible for which the length of at least 50% of the lines from the bottom of the plant pot differ by no more than 3 mm from the outside diameter of the water collection pot. **Figure 2B** shows a schematic representation of a possible embodiment according to the present invention from a different perspective than Figure 2A. Figure 2B shows a schematic representation showing the 2-30% of these parallel lines that are at least 5 mm smaller than the outside diameter of the water collection pot. This difference in distance creates the opening **3** between the water collection pot **2** and the plant pot **1.** The raised edge of the water collection pot is visible in the opening **3.**

**Figure 3** shows a cross-section of a possible embodiment according to the present invention. In this embodiment, the plant pot is stacked on top of the water collection pot. The water collection pot is only partially shown. The visible part of the plant pot **14** and the horizontally visible part of the water collection pot **15** are difficult to distinguish visually from each other because the two pots fit closely together and consist of substantially the same material. The protrusion of the bottom of the plant pot **16** fits into the indentation of the water collection pot **17.** In addition, the leg at the bottom of the plant pot **18** ensures better fixation between the two pots. This further reduces the chance of slipping. In addition, this extra edge complicates loss of water from the multi-pot system, both in liquid and gaseous states. The bottom of the plant pot is not completely lowered and does not touch the water collection pot over the full length, so that a reservoir for water remains available. The height of the multi-pot system **13** is hardly increased by the water collection pot. Note that from this perspective, the opening **3** between the plant pot and water collection pot, as shown in Figure 2B, is not visible.

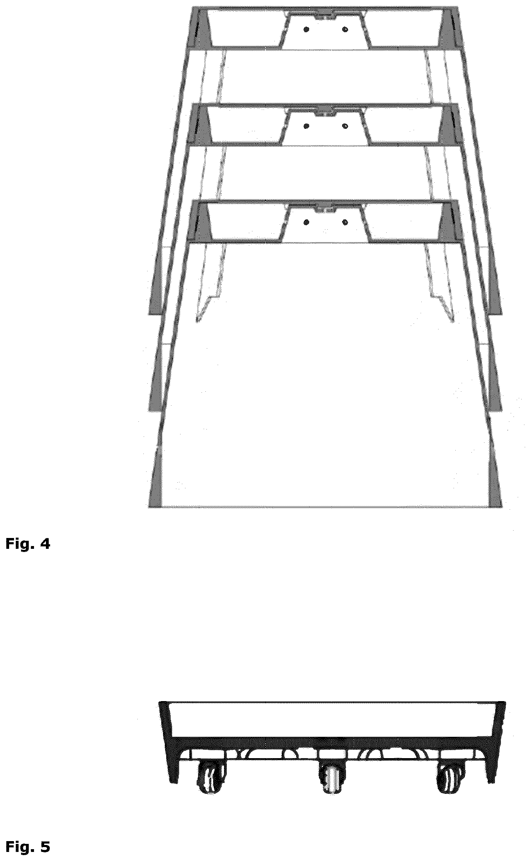

**Figure 4** shows a schematic representation in front view of a stacked embodiment of the present invention. During transport, the volume occupied by the water collection pot will be minimal.

**Figure 5** shows a detailed view of an embodiment in which wheels are mounted on the water collection pot according to the present invention. These wheels at the bottom of the water collection pot help when moving the two-pot system. Plant pots can be heavy and lifting heavy objects is undesirable for the human back. When used indoors, the plant pot can be moved to follow the sun. The upright wall of the water collection pot extends below the ground surface of the water collection pot to prevent objects from ending up under the wheels. Note that from this perspective, the opening **3** between the plant pot and water collection pot, as shown in Figure 2B, is not visible.

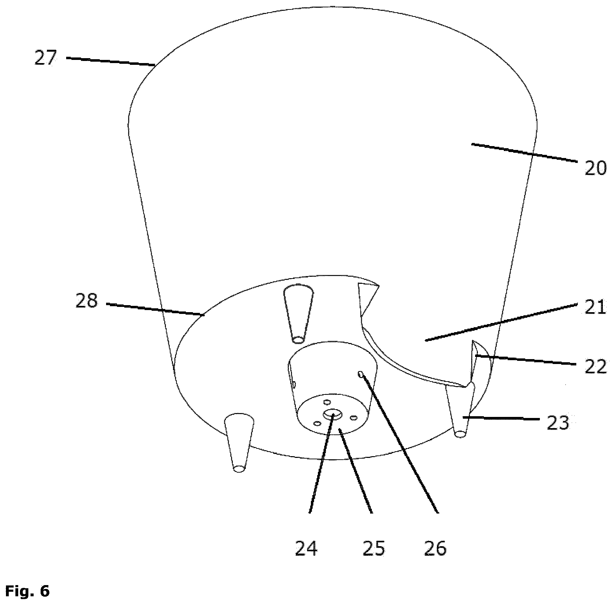

**Figure 6** shows a schematic representation of the underside of a plant pot from an oblique view according to an embodiment of the present invention. The plant pot comprises an upright wall **20** with a free end **27** and an end at the bottom of the plant pot. The upright wall continues under the bottom **21.** Flaps **22** ensure that there is no opening between the continuing part of the upright wall **21** and the water collection pot (not shown). Hereby, the flaps **22** prevent mosquitoes or dirt from entering the water in the water collection pot. The length over which the upright wall continues under the bottom is slightly shorter than the length of the legs **23,** or equal to this. A protrusion **25** in the bottom comprises a few openings **26,** suitable for draining excess water or letting water back into the plant pot. The opening at the bottom center of protrusion **24** fits at least partially into a protrusion in the ground surface of the water collection pot (not drawn). The points of contact between the bottom and the upright wall **28** form a kidney shape.

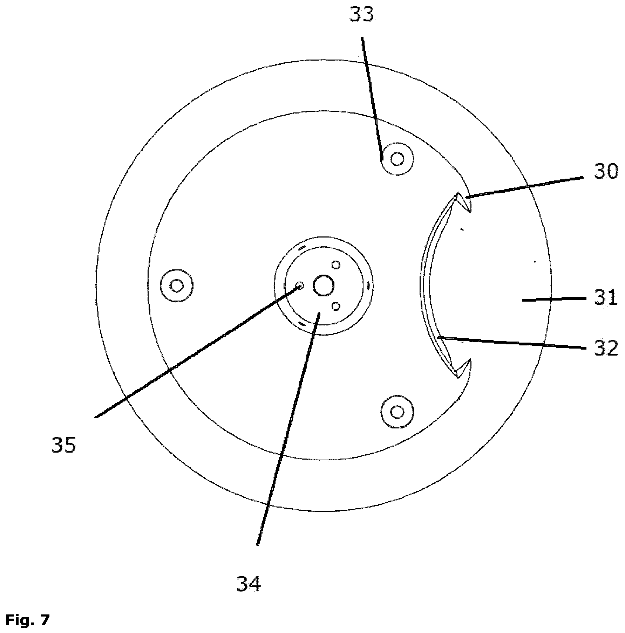

**Figure 7** shows a schematic representation of the underside of a plant pot from a perpendicular view according to an embodiment of the present invention. The plant pot comprises legs **33** and in the bottom center a protrusion **34** with various openings **35.** The upright wall forms a truncated cone with an indentation. This indentation is there because the upright wall is circular at the top and kidney-shaped at the other end, where it touches the bottom. The change from kidney-shaped to circular happens slowly as one gets further and further from the legs. The upright wall **32** continues below the bottom surface. The flaps **31** ensure a close fit between the plant pot and the water collection pot, as shown in Figure 2.

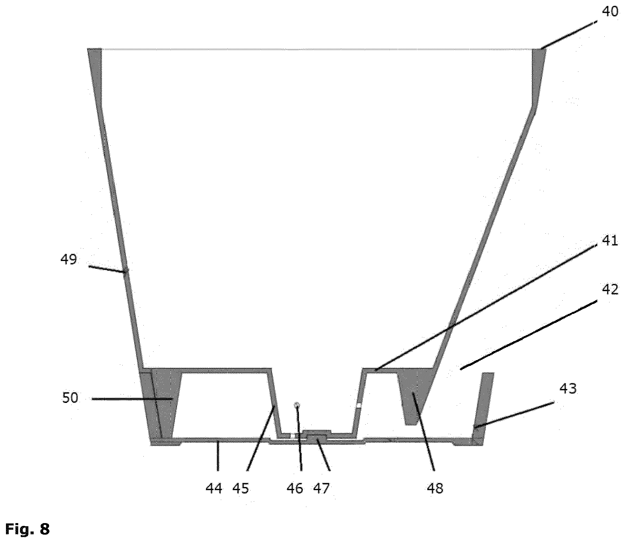

**Figure 8** shows another cross-section of a possible embodiment according to the present invention. The water collection pot comprises a ground surface **44** and a raised edge **43** with a thickness of 1mm-1cm. In the middle of the ground surface **44** an elevation **47** is present. This elevation is circular and serves to place the plant pot more firmly on the water collection pot. This makes it less likely that the two pots would slip apart. The plant pot comprises a bottom **41** with openings **46,** a wall **49** raised from the bottom and 3-8 legs **50.** This cross-section passes through 1 leg. At the end of the upright wall **40,** the diameter is greater than the diameter of the smallest circle enclosing the bottom **41.** The opening **46** is located on a protrusion in the center of the bottom **45.** The cross-section shown in this figure shows an opening **42** between the plant pot and the water collection pot. This opening **42** is suitable for supplying water in the volume between the plant pot and the water collection pot. A continuing part under the bottom of the upright wall **48** partially closes off this volume from the ambient air. As a result, less dirt will end up in the water between the pots.

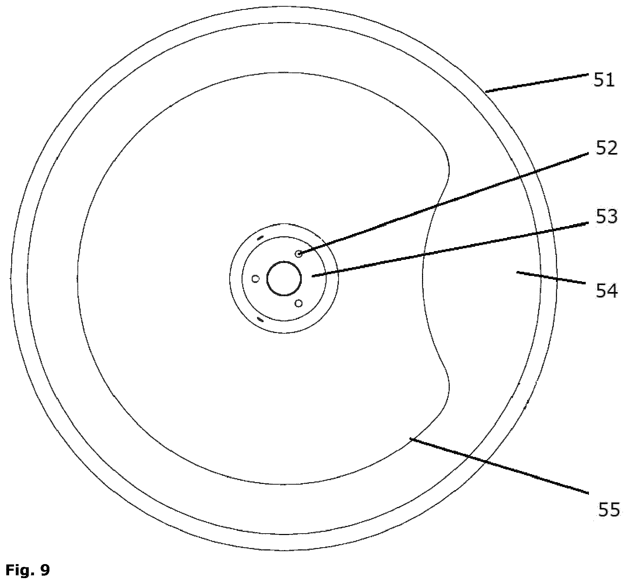

**Figure 9** shows a top view of a possible embodiment of a plant pot according to the present invention. The top view of the plant pot is from a viewing direction perpendicular to the bottom of the plant pot, from the direction of the upright wall. Said legs not visible. At the top, according to this embodiment, the end of the upright wall **51** is circular. The circular shape of the cross-section of the upright wall is maintained up to point **54.** From a height of 80% of the height of the upright wall, the cross-section of the upright wall, parallel to the bottom, will be kidney-shaped. The bottom of the plant pot **55** is also kidney-shaped. In the middle of the bottom a protrusion in the middle of the bottom **53** with openings **52** is visible.

## Claims

1. Device for a two-pot system consisting of a plant pot and a water collection pot, the water collection pot comprising a ground surface and a raised edge suitable for collecting excess water from the plant pot and wherein the raised edge has a thickness suitable to support the plant pot; wherein the plant pot comprises a bottom with openings, a wall that rises from the bottom, and 3-8 legs, wherein the legs are located on the bottom, along the other side of the bottom than the upright wall, **characterized in that** the length of at least 50% of the centerlines of the raised edge of the water collection pot differs at most by the thickness of the raised edge from the length of the parallel lines through the bottom of the plant pot;
and that 2-30% of the centerlines of the raised edge of the water collection pot are 1.05-4 times the thickness of the raised edge longer than the length of the parallel lines through the bottom of the plant pot.

2. The device according to claim 1, **characterized in that** the upright wall of the plant pot continues under the bottom in the direction of the legs, at places where these parallel lines from the bottom of the plant pot differ by at least 5 mm from the outside diameter of the water collection pot.

3. The device according to claim 2, **characterized in that** the continuing upright wall under the bottom has a height of 70-95% of the height of the legs, measured perpendicular to the bottom.

4. The device according to any of the preceding claims 1-3, **characterized in that** the openings in the bottom of the plant pot have a diameter of less than 5 mm.

5. The device according to any of the preceding claims 1-4, **characterized in that** the openings of the plant pot are located on a protrusion in the center of the bottom, preferably differing at most 20° from the direction of the legs.

6. The device according to any of the preceding claims 1-5, **characterized in that** the legs are at least 1 mm from the edge of the bottom of the plant pot.

7. The device according to any of the preceding claims 1-6, **characterized in that** the bottom of the water collection pot is provided with wheels.

8. The device according to any of the preceding claims 1-7, **characterized in that** the diameter of the smallest circle around the legs is a maximum of 10% smaller than the smallest inner diameter of the water collection pot.

9. The device according to any of the preceding claims 1-8, **characterized in that** the angle between the ground surface and raised edge differs by a maximum of 5° from the angle between the bottom and the legs, preferably both angles are 70-85°.

10. The device according to claim 9, **characterized in that** the height of the legs differs by a maximum of 10% from the height of the raised edge.

11. The device according to claim 9 or 10, **characterized in that** the ratio between the height of the water collection pot and the height of the plant pot is between 1:20 and 1:3, preferably between 1:15 and 1:5.

12. The device according to any of the preceding claims 1-11, **characterized in that** the plant pot and the water collection pot consist of at least 90% by weight of the same material.

13. The device according to claim 12, **characterized in that** the plant pot and the water collection pot comprise a recycled plastic and mineral.

14. The device according to any of the preceding claims 9-13, **characterized in that** the shape of the raised edge of the water collection pot is the same as the shape of the end of the upright wall.

15. Use of the device according to any of claims 1-14 for keeping, growing or treating plants in a plant pot wherein excess water drains into a close-fitting water collection pot and rises by capillary action back into the plant pot when the soil moisture has dropped.
